# EUROPÄISCHE PATENTSCHRIFT

(11) **EP 4 105 539 B1**
(45) Veröffentlichungstag und Bekanntmachung des Hinweises auf die Patenterteilung: **04.06.2025**
(21) Anmeldenummer: 21179535.6
(22) Anmeldetag: 15.06.2021
(51) Int. Cl.: F16P 3/14, B21D 55/00, B30B 1/00

(54) **UMFORMEINRICHTUNG UND VERFAHREN ZUM BETREIBEN EINER UMFORMEINRICHTUNG**
RESHAPING DEVICE AND METHOD FOR OPERATING SAME
DISPOSITIF DE FORMAGE ET PROCÉDÉ DE FONCTIONNEMENT D'UN DISPOSITIF DE FORMAGE

(43) Veröffentlichungstag der Anmeldung: 21.12.2022
(73) Patentinhaber: Fiessler Elektronik GmbH & Co. KG, 73773 Aichwald (DE)
(72) Erfinder: Fiessler, Lutz, 73773 Aichwald (DE)
(74) Vertreter: Patentanwälte Magenbauer & Kollegen Partnerschaft mbB

(56) Entgegenhaltungen:
- EP-A1- 3 444 044
- EP-A1- 3 722 651
- WO-A1-2018/090069
- US-A1- 2002 134 922

## Beschreibung

Die Erfindung betrifft eine Umformeinrichtung mit einem Maschinenbett, an dem ein erstes Werkzeug angeordnet ist, und mit einem relativbeweglich am Maschinenbett aufgenommenen Werkzeugträger, dem ein zweites Werkzeug und eine Antriebseinrichtung zur Bewegung des Werkzeugträgers zugeordnet sind, wobei das zweite Werkzeug mit dem ersten Werkzeug einen größenvariablen Arbeitsspalt bestimmt, mit einer Maschinensteuerung zur Ansteuerung der Antriebseinrichtung und mit einer Sicherheitssteuerung zur Sperrung der Antriebseinrichtung, wobei die Sicherheitssteuerung mit wenigstens einer Strahlungsquelle und mit mehreren der Strahlungsquelle gegenüberliegend angeordneten Strahlungsdetektoren verbunden ist, wobei zumindest ein Teil der von der Strahlungsquelle ausgehenden Strahlenbündel längs einer Arbeitskante des ersten Werkzeugs ausgerichtet ist, sowie mit einem der Antriebseinrichtung zugeordneten Positionsmesssystem, das zur Bereitstellung von Positionssignalen in Abhängigkeit von einer Position des Werkzeugträgers ausgebildet ist, wobei die Maschinensteuerung ein erstes Wegmesssystem für eine zyklische Verarbeitung der Positionssignale in einem ersten, schnellen Arbeitstakt zu ersten Positionswerten aufweist und wobei die Sicherheitssteuerung ein zweites Wegmesssystem für eine zyklische Verarbeitung der Positionssignale in einem zweiten, langsamen Arbeitstakt zu zweiten Positionswerten aufweist. Ferner betrifft die Erfindung ein Verfahren zum Betreiben einer Umformeinrichtung.

Die EP 2 940 369 A1 offenbart eine Umformeinrichtung mit einem Maschinenbett und einem relativbeweglich daran aufgenommenen Werkzeugträger, der mit einer Antriebseinrichtung gekoppelt ist, einer Maschinensteuerung zur Ansteuerung der Antriebseinrichtung und einer Überwachungseinrichtung, die zur Überwachung von Bewegungen des Werkzeugträgers und zur Ansteuerung einer der Antriebseinrichtung vorgeschalteten Trenneinrichtung ausgebildet ist, sowie mit zwei Wegmesssystemen, die jeweils zur Ausgabe von Positionssignalen für eine Positionsermittlung des Werkzeugträgers gegenüber dem Maschinenbett ausgebildet sind, wobei das erste Wegmesssystem für eine zyklische Bereitstellung von ersten Positionssignalen in einem ersten, schnellen Arbeitstakt ausgebildet ist und wobei das zweite Wegmesssystem für eine zyklische Bereitstellung von zweiten Positionssignalen in einem zweiten, langsamen Arbeitstakt ausgebildet ist und wobei eine Deaktivierung wenigstens eines Strahlungsdetektors erfolgt, wenn bei einem Vergleich eine vorgebbare Differenz zwischen dem ersten und dem zweiten Positionssignal unterschritten ist.

Die US 2002/0134922 A1 offenbart eine Sicherheitsvorrichtung zum Schutz eines Objekts, das in den Weg eines sich bewegenden Werkzeugs einer Abkantpresse eintritt. Hierzu sind Laser-Sender und Laser-Empfänger zur Montage in fester Beziehung zu einer Vorderkante des Werkzeugs vorgesehen. Eine Steuerung mit einer Anhalteeinrichtung zum Anhalten der Vorwärtsbewegung der Werkzeugs als Reaktion auf bestimmte Eventualitäten ist ebenfalls vorgesehen, wobei die Eventualitäten solche umfassen können, die eine Unterbrechung oder Behinderung der Lichtstrahlen beinhalten, sowie solche, die auf einen Fehler der Presse oder der Sicherheitsvorrichtung selbst hinweisen. Das Steuergerät umfasst auch Mittel zur Lasersteuerung und - verarbeitung, Mittel zur Steuerung der Messerbewegung, Mittel zur Verarbeitung der Messerposition und Mittel zur Erfassung von Vibrationen.

Die EP 3 444 044 A1 offenbart einen Projektor, der Laserlicht zwischen einen Stempel und eine Matrize strahlt, das zum Auftreffen auf einen optischen Empfänger bestimmt ist, der mit einer Sicherheitssteuerung verbunden ist, die darüber bestimmt, ob sich der optische Empfänger in einem Zustand befindet, in dem er Licht empfängt oder in dem das Laserlicht unterbrochen ist. Die Sicherheitssteuerung steuert das Absenken der Matrize und stoppt deren Bewegung, wenn festgestellt wird, dass der optische Empfänger in einem Zeitraum, in dem eine Bedingung erfüllt ist, dass ein erster Abstand zwischen einer Spitze des Stempels und einem oberen Ende eines Materials gleich oder größer als ein zweiter Abstand zwischen der Spitze des Stempels und dem optischen Empfänger ist, in den lichtabschirmenden Zustand eingetreten ist. Das Absenken des Werkzeugs wird fortgesetzt, selbst wenn festgestellt wird, dass der optische Empfänger in einem Zeitraum, in dem eine Bedingung erfüllt ist, dass der erste Abstand kleiner als der zweite Abstand ist, in dem lichtblockierenden Zustand ist.

Die Aufgabe der Erfindung besteht darin, eine Umformeinrichtung sowie ein Verfahren zum Betreiben einer Umformeinrichtung bereitzustellen, bei denen eine verbesserte positionsabhängige Deaktivierung eines Strahlungsdetektors ermöglicht wird.

Diese Aufgabe wird für eine Umformeinrichtung der eingangs genannten Art dadurch gelöst, das die Sicherheitssteuerung dazu ausgebildet ist, für eine Deaktivierung eines ersten Strahlungsdetektors an einer vorgegebenen ersten Deaktivierungsposition einen Vergleich zwischen einem ersten Statussignal und einem zweiten Statussignal vorzunehmen, wobei das erste Statussignal durch Vergleich eines, insbesondere von der Maschinensteuerung, durch Addition eines ersten Positionskorrekturwerts zum ersten Positionswert erhaltenen ersten Istpositionswerts mit einem ersten Deaktivierungspositionswert ermittelt wird und wobei das zweite Statussignal durch Vergleich eines, insbesondere von der Sicherheitssteuerung, durch Addition eines zweiten Positionskorrekturwert mit dem zweiten Positionswert erhaltenen zweiten Istpositionswerts mit dem ersten Deaktivierungspositionswert ermittelt wird und wobei die Sicherheitssteuerung dazu ausgebildet ist, die Deaktivierung bei Übereinstimmung des ersten Statussignals mit dem zweiten Statussignal vorzunehmen.

Vorzugsweise handelt es sich bei dem ersten Statussignal und bei dem zweiten Statussignal um einen logischen Zustand wie beispielsweise ein logisches High-Signal bzw. ein logisches Low-Signal. Bevorzugt ist vorgesehen, dass das erste Statussignal für den Fall, dass Identität oder weitgehende Übereinstimmung (innerhalb eines vorgebbaren Werteintervalls) zwischen dem ersten Istpositionswert und dem ersten Deaktivierungspositionswert vorliegt, als logisches High-Signal ausgegeben wird und andernfalls als logisches Low-Signal ausgegeben wird. Ferner ist vorgesehen, dass das zweite Statussignal für den Fall, dass Identität oder weitgehende Übereinstimmung (innerhalb eines vorgebbaren Werteintervalls) zwischen dem zweiten Istpositionswert und dem ersten Deaktivierungspositionswert vorliegt, als logisches High-Signal ausgegeben wird und andernfalls als logisches Low-Signal ausgegeben wird. Die Sicherheitssteuerung hat in jedem Fall die Aufgabe, das zweite Statussignal zu ermitteln und den Vergleich zwischen dem ersten Statussignal und dem zweiten Statussignal vorzunehmen.

Die Ermittlung des ersten Statussignals kann wahlweise in der Maschinensteuerung oder in der Sicherheitssteuerung vorgenommen werden, wobei in letzterem Fall die Bereitstellung des ersten Positionswerts oder des ersten Istpositionswerts durch die Maschinensteuerung erfolgt.

Dieser Vorgehensweise liegt die Überlegung zu Grunde, dass die Maschinensteuerung keine besonderen Vorkehrungen aufweist, die auf einen sicherheitsgerichteten Betrieb ausgerichtet sind und daher der mit Hilfe des ersten Wegmesssystems ermittelte ersten Positionswert sowie der erste Istpositionswert mit einer größeren Wahrscheinlichkeit fehlerbehaftet sein können, als dies für den zweiten Positionswert und den zweiten Istpositionswert der Fall ist, da diese von der sicherheitsgerichtet ausgebildeten Sicherheitssteuerung ermittelt werden. Üblicherweise umfasst die Maschinensteuerung einen einzigen Prozessor, mit dem die zur Steuerung der Umformeinrichtung erforderlichen Berechnungen durchgeführt werden können, wobei die Ermittlung des ersten Positionswerts und des ersten Istpositionswerts bei dieser Berechnung sind und somit der Prozessor mit seiner Peripherie das erste Wegmesssystem bildet. Ferner ist beispielhaft vorgesehen, dass der zweite Positionswert und der zweite Istpositionswert in der Sicherheitssteuerung unter Verwendung von wenigstens zwei unabhängig voneinander arbeitenden Mikroprozessoren ermittelt werden, die gemeinsam das zweite Wegmesssystem bilden. Eine Ausgabe des zweiten Istpositionswerts durch dieses zweite Wegmesssystem erfolgt nur dann, wenn eine Übereinstimmung zwischen den zweiten Positionswerten und den zweiten Istpositionswerten besteht, die die beiden Mikroprozessoren ermittelt haben.

Durch diese Vorgehensweise wird eine zuverlässigere Deaktivierung des ersten Strahlungsdetektors an der gewünschten Deaktivierungsposition ermöglicht, da eine Übereinstimmung zwischen dem ersten Istpositionswert, dem zweiten Istpositionswert und dem Deaktivierungspositionswert vorliegen muss. Bei Fehlereinflüssen, die sich sowohl auf den ersten Istpositionswert als auch auf den zweiten Istpositionswert auswirken können, wird durch den Vergleich des ersten Istpositionswerts mit dem zweiten Istpositionswert und dem ersten Deaktivierungspositionswert eine fehlerhafte Deaktivierung mit größerer Wahrscheinlichkeit ausgeschlossen, als dies bei Betrachtung eines Abweichungsintervalls zwischen dem ersten und dem zweiten Positionssignal der Fall ist.

Vorzugsweise handelt es sich bei dem ersten Positionskorrekturwert um einen ersten konstanten Wert und bei dem zweiten Positionskorrekturwert um einen zweiten konstanten Wert, die in der Sicherheitssteuerung gespeichert sind und die auf die Gegebenheiten der jeweiligen Umformeinrichtung angepasst sind.

Vorteilhafte Weiterbildungen der Erfindung sind Gegenstand der Unteransprüche.

Zweckmäßig ist es, wenn die Sicherheitssteuerung derart eingerichtet ist, dass eine Deaktivierung eines zweiten Strahlungsdetektors an einer vorgegebenen zweiten Deaktivierungsposition, insbesondere ausschließlich, anhand des zweiten Positionswerts vorzunehmen, wobei ein Abstand des ersten Strahlungsdetektors zum zweiten Werkzeug größer als ein Abstand des zweiten Strahlungsdetektors zum zweiten Werkzeug ist. Hierbei wird davon ausgegangen, dass mit dem Erreichen der ersten Deaktivierungsposition eine Reduzierung der Annäherungsgeschwindigkeit zwischen dem ersten Werkzeug und dem zweiten Werkzeug durch entsprechende Ansteuerung der Antriebseinrichtung vorgenommen wird und dass die Sicherheitssteuerung trotz des zweiten, langsamen Arbeitstakts in der Lage ist, eine sichere und ausreichend präzise Bestimmung der Position des zweiten Werkzeugs gegenüber dem ersten Werkzeug durchzuführen. Dementsprechend kann hierbei auf die Auswertung des mit dem ersten, schnellen Arbeitstakt berechneten ersten Positionswerts verzichtet werden, der in der Maschinensteuerung berechnet wird und der eine höhere Fehlerwahrscheinlichkeit aufweist.

Bevorzugt ist vorgesehen, dass die Maschinensteuerung derart eingerichtet ist, dass der erste Positionskorrekturwert anhand einer ersten, insbesondere maximalen, Annäherungsgeschwindigkeit für die Annäherung des zweiten Werkzeugs an das erste Werkzeug und einer ersten Zykluszeit für den ersten Arbeitstakt ermittelt wird und dass die Sicherheitssteuerung derart eingerichtet ist, dass der zweite Positionskorrekturwert anhand der ersten, insbesondere maximalen, Annäherungsgeschwindigkeit und einer zweiten Zykluszeit für den zweiten Arbeitstakt ermittelt wird.

Der erste Positionskorrekturwert weist im Vergleich zum zweiten Positionskorrekturwert einen kleineren Betrag auf und bildet somit ab, dass die Maschinensteuerung mit einem schnellen Arbeitstakt betrieben wird, der in einer kurzen ersten Zykluszeit für die Berechnung des ersten Positionswerts resultiert.

Der erste Positionskorrekturwert entspricht demjenigen Weg, den das zweite Werkzeug gegenüber dem ersten Werkzeug innerhalb der ersten Zykluszeit zurückgelegt, wobei eine gleichförmige Bewegung zwischen dem ersten Werkzeug und dem zweiten Werkzeug zugrundegelegt wird. Dementsprechend entspricht der durch Addition des ersten Positionskorrekturwerts und des ersten Positionswerts erhaltene erste Istpositionswert der tatsächlichen Position des zweiten Werkzeugs gegenüber dem ersten Werkzeug.

Der zweite Positionskorrekturwert entspricht demjenigen Weg, den das zweite Werkzeug gegenüber dem ersten Werkzeug innerhalb der zweiten Zykluszeit zurückgelegt, wobei auch hier eine gleichförmige Bewegung zwischen dem ersten Werkzeug und dem zweiten Werkzeug zugrundegelegt wird. Dementsprechend entspricht der durch Addition des zweiten Positionskorrekturwerts und des zweiten Positionswerts erhaltene zweite Istpositionswert ebenfalls der tatsächlichen Position des zweiten Werkzeugs gegenüber dem ersten Werkzeug.

Bei einer Weiterbildung der Erfindung ist vorgesehen, dass die Sicherheitssteuerung derart eingerichtet ist, dass die Deaktivierung des ersten Strahlungsdetektors nur dann erfolgt, wenn der zweite Istpositionswert zeitlich vor dem ersten Istpositionswert vorliegt. Hiermit wird sichergestellt, dass die sicherheitsrelevante Deaktivierung des ersten Strahlungsdetektors nicht zu einem zu frühen Zeitpunkt erfolgt, zu dem möglicherweise noch eine Gefährdung eines Benutzers auftreten könnte, sofern der erste Strahlungsdetektor bereits ausgeschaltet wäre.

Die Erfindung betrifft auch ein Verfahren zum Betreiben einer Umformeinrichtung mit den Schritten: Ermitteln von Positionssignalen eines Positionsmesssystems zur Berechnung eines zeitlich variablen Abstand zwischen einem ersten Werkzeug, das an einem Maschinenbett angeordnet ist und einem zweiten Werkzeug, das an einem relativbeweglich am Maschinenbett aufgenommenen Werkzeugträger festgelegt ist und das mit dem ersten Werkzeug einen größenvariablen Arbeitsspalt bestimmt, und Verarbeiten der Positionssignale in einem ersten Wegmesssystem einer Maschinensteuerung, das mit einem ersten, schnellen Arbeitstakt betrieben wird, zu ersten Positionswerten und Verarbeiten der Positionssignale in einem zweiten Wegmesssystem einer Sicherheitssteuerung, das mit einem zweiten, langsamen Arbeitstakt betrieben wird, zu zweiten Positionswerten, Verarbeiten eines ersten Detektorsignals eines ersten Strahlungsdetektors und Verarbeiten eines zweiten Detektorsignals eines zweiten Strahlungsdetektors, die an einem ersten seitlichen Endbereich des zweiten Werkzeugs angeordnet sind und die von einer gegenüberliegend an einem zweiten Endbereich des zweiten Werkzeugs angeordneten Strahlungsquelle beleuchtet werden, in der Sicherheitssteuerung, wobei ein Abstand des ersten Strahlungsdetektors zum zweiten Werkzeug größer als ein Abstand des zweiten Strahlungsdetektors zum zweiten Werkzeug ist, Freigeben einer Energieversorgung für eine mit dem Werkzeugträger gekoppelte Antriebseinrichtung durch die Maschinensteuerung und die Sicherheitssteuerung bei einer Spaltweite des Arbeitsspalts, die größer als eine vorgegebene Spaltweite ist, zur Reduzierung der Spaltweite des Arbeitsspalts mit einer ersten, insbesondere maximalen, Annäherungsgeschwindigkeit zwischen erstem Werkzeug und zweitem Werkzeug, Durchführen eines Vergleichs zwischen einem ersten Statussignal und einem zweiten Statussignal, wobei das erste Statussignal durch Vergleich eines von der Maschinensteuerung oder von der Sicherheitssteuerung durch Addition eines ersten Positionskorrekturwerts und des ersten Positionswerts erhaltenen ersten Istpositionswerts mit einem ersten Deaktivierungspositionswert ermittelt wird und wobei das zweite Statussignal durch Vergleich eines von der Sicherheitssteuerung durch Addition eines zweiten Positionskorrekturwerts und dem zweiten Positionswert erhaltenen zweiten Istpositionswerts mit dem ersten Deaktivierungspositionswert erhalten wird, und Deaktivieren des ersten Strahlungsdetektors bei Vorliegen einer Übereinstimmung zwischen dem ersten Statussignal und dem zweiten Statussignal.

Bei einer Weiterbildung der Erfindung ist vorgesehen, dass mit der Deaktivierung des ersten Strahlungsdetektors eine Umschaltung der Antriebseinrichtung von der ersten Annäherungsgeschwindigkeit auf eine zweite, insbesondere mittlere, Annäherungsgeschwindigkeit vorgenommen wird.

In weiterer Ausgestaltung des Verfahrens ist vorgesehen, dass von der Sicherheitssteuerung eine Deaktivierung des zweiten Strahlungsdetektors an einer zweiten Deaktivierungsposition vorgenommen wird, wenn der zweite Positionswert mit der zweiten Deaktivierungsposition übereinstimmt.

Bei einer Weiterbildung des Verfahrens ist vorgesehen, dass mit der Deaktivierung des zweiten Strahlungsdetektors eine Umschaltung der Antriebseinrichtung von der zweiten Annäherungsgeschwindigkeit auf eine dritte, insbesondere niedrige, Annäherungsgeschwindigkeit vorgenommen wird.

In weiterer Ausgestaltung des Verfahrens ist vorgesehen, dass der erste Positionskorrekturwert anhand der ersten Annäherungsgeschwindigkeit und einer ersten Zykluszeit für den ersten Arbeitstakt ermittelt wird und dass der zweite Positionskorrekturwert anhand der ersten Annäherungsgeschwindigkeit und einer zweiten Zykluszeit für den zweiten Arbeitstakt ermittelt wird.

Bevorzugt ist für das Verfahren vorgesehen, dass der erste Deaktivierungspositionswert einen ersten Abstand zu einer ersten Deaktivierungsposition für die Deaktivierung des ersten Strahlungsdetektors aufweist, wobei der erste Abstand derart bemessen ist, dass der von der Sicherheitssteuerung innerhalb des zweiten Arbeitstakts durchgeführte Vergleich zwischen dem ersten Istpositionswert und dem zweiten Istpositionswert abgeschlossen ist, bevor der Werkzeugträger die erste Deaktivierungsposition erreicht.

Eine vorteilhafte Ausführungsform der Erfindung ist in der Zeichnung dargestellt. Hierbei zeigt:
- Figur 1: eine schematische Vorderansicht einer Umformeinrichtung,

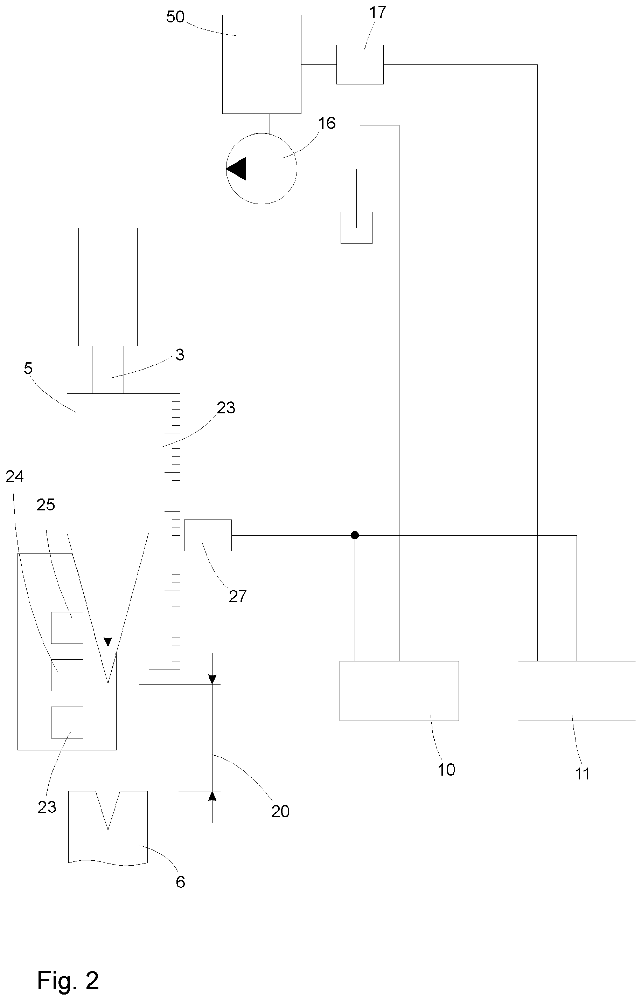

- Figur 2: eine schematische Darstellung der wesentlichen Funktionskomponenten der Umformeinrichtung gemäß der Figur 1, und
- Figur 3: ein Ablaufdiagramm für die Bestimmung einer Ausblendeposition.

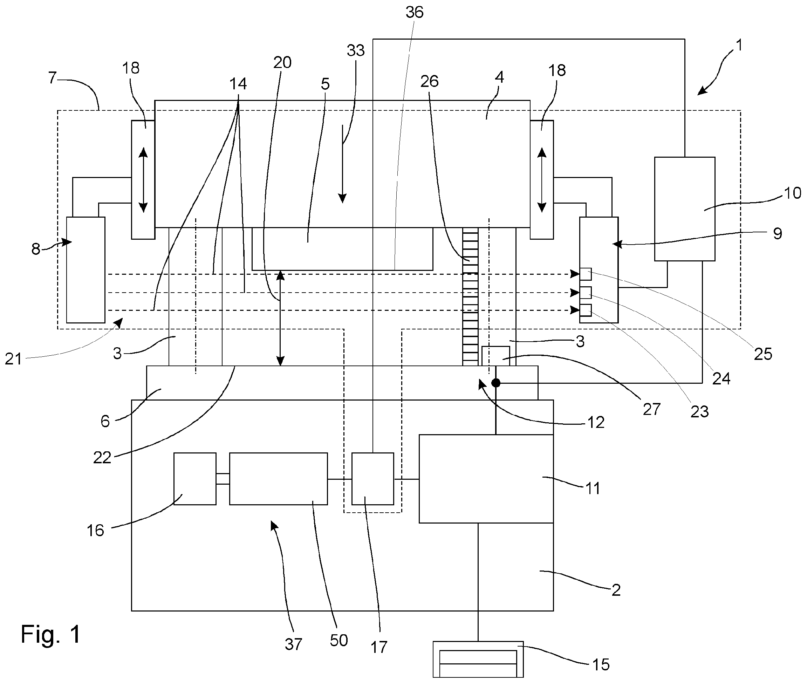

Eine gemäß der Figur 1 exemplarisch als Gesenkbiegemaschine 1 ausgebildete Umformmaschine umfasst ein Maschinenbett 2, an dem zwei Führungsstangen 3 angebracht sind, die für eine linearbewegliche Lagerung eines Werkzeugträgers 4 ausgebildet sind. Der Werkzeugträger 4 kann in vertikaler Richtung linear längs der Führungsstangen 3 bewegt werden, um einen als Werkzeug dienenden und als erstes Werkzeug bezeichneten Stempel 5 gegenüber einer als zweites Werkzeug bezeichneten Matrize 6 zu bewegen. Bei einer Bewegung des Stempels 5 in eine Schließbewegungsrichtung 33 wird ein Arbeitsspalt 20 zwischen dem Stempel 5 und der Matrize 6 verkleinert, so dass eine Deformation eines nicht dargestellten, in den Arbeitsspalt 20 zwischen Stempel 5 und Matrize 6 einschiebbaren Werkstücks, beispielsweise einer Blechtafel, ermöglicht wird.

Die Gesenkbiegemaschine 1 ist mit einer exemplarisch aus mehreren Komponenten aufgebauten Überwachungseinrichtung 7 ausgestattet, die dazu vorgesehen ist, die Verletzungsgefahr durch die Gesenkbiegemaschine 1 zu minimieren und einen raschen und störungsfreien Bearbeitungsablauf für die zu bearbeitenden Werkstücke zu gewährleisten. Exemplarisch umfasst die Überwachungseinrichtung 7 ein am Werkzeugträger 4 angebrachtes Lichtgitter 21 mit einer Sendeeinrichtung 8 und einer Empfangseinrichtung 9. Die Sendeeinrichtung 8 stellt mehrere Detektionsstrahlen 14 bereit, die rein exemplarisch parallel zu einer längsten Kante 22 der Matrize 6 ausgerichtet sind und von Strahlungsdetektoren 23, 24, 25 der Empfangseinrichtung 9 empfangen werden können.

Die Strahlungsdetektoren 23, 24, 25 der Empfangseinrichtung 9 stellen jeweils elektrische Signale an eine Sicherheitssteuerung 10 bereit, sofern Detektionsstrahlen 14 des Lichtgitters auf die jeweiligen, nicht näher dargestellten lichtempfindlichen Strahlungsdetektoren 23, 24, 25 auftreffen. Dementsprechend kann die Sicherheitssteuerung 10 feststellen, welcher der Detektionsstrahlen 14, beispielsweise durch einen Eingriff eines Benutzers in einen Gefahrenbereich, unterbrochen ist und in Abhängigkeit von der Größe des Arbeitsspalts 20 eine geeignete Reaktion herbeiführen.

Die Gesenkbiegemaschine 1 umfasst ferner eine Maschinensteuerung 11, die mit einer Abtasteinrichtung 27 eines Positionsmesssystems 12, mit einem Fußschalter 15 sowie mit der Sicherheitssteuerung 10 jeweils elektrisch gekoppelt ist. Die Maschinensteuerung 11 kann exemplarisch als numerische Computersteuerung (CNC-Steuerung, computer numerical control) ausgebildet sein. Die Maschinensteuerung 11 ermöglicht die Eingabe von Informationen über die Geometrien des Stempels 5, der Matrize 6 und des nicht dargestellten Werkstücks sowie über die gewünschte Deformation des Werkstücks durch einen Benutzer und ermittelt daraus den Bewegungsablauf für den Stempel 5 gegenüber der Matrize 6. Der Fußschalter 15 ermöglicht die Auslösung des Bewegungsablaufs durch einen Bediener.

Das Positionsmesssystem 12 umfasst zusätzlich zu der Abtasteinrichtung 27 einen an einer der Führungsstangen 3 angebrachten Glasmaßstab 26, der als Maßverkörperung dient und von der Abtasteinrichtung kontaktlos, insbesondere optisch, abgetastet werden kann, wobei die Abtasteinrichtung 27 dazu eingerichtet ist, ein elektrisches Positionssignal bereitzustellen, aus dem eine Position des Stempels 5 gegenüber der Matrize 6 ermittelt werden kann.

Für die Einleitung einer Bewegung auf den in der Fig.1 dargestellten Werkzeugträger 4 und den daran aufgenommenen Stempel 5 umfasst die Gesenkbiegemaschine 1 eine Antriebseinrichtung 37, die von der Maschinensteuerung 11 angesteuert werden kann. Exemplarisch umfasst die Antriebseinrichtung 37 einen Elektromotor 50, der mit einer Hydraulikpumpe 16 gekoppelt ist, die einen Ölstrom an nicht dargestellte, den Führungsstangen 3 zugeordnete Hydraulikzylinder bereitstellen kann. Für die Bereitstellung der hierzu notwendigen elektrischen Energie ist der Elektromotor 50 elektrisch mit der Maschinensteuerung 11 verbunden. Für eine sichere Betriebsweise der Antriebseinrichtung 37 ist in die elektrische Verbindung zwischen der Maschinensteuerung 11 und dem Elektromotor 50 eine Trenneinrichtung 17 eingeschleift, die von der Sicherheitssteuerung 10 angesteuert werden kann und die ebenfalls eine Komponente der Überwachungseinrichtung 7 bildet. Bei einer nicht darstellten Variante der Trenneinrichtung weist diese Abschaltventile für den Ölstrom zu den Hydraulikzylindern auf und ist dementsprechend zwischen der Ölpumpe und den Hydraulikzylindern angeordnet.

Eine Anpassung der Position des Lichtgitters 21 an unterschiedlich hohe Stempel 5 wird dadurch ermöglicht, dass die Sendeeinrichtung 8 und die Empfangseinrichtung 9 jeweils linearbeweglich mittels Führungsmitteln 18 am Werkzeugträger 4 aufgenommen. Vorzugsweise sind die Führungsmittel 18 für die Sendeeinrichtung 8 und die Empfangseinrichtung 9 derart miteinander bewegungsgekoppelt, dass eine synchrone Verstellung der beiden Führungsmittel 18 gewährleistet ist.

Exemplarisch ist vorgesehen, dass das Positionsmesssystem 12 und die Maschinensteuerung 11 gemäß einer ersten Sicherheitskategorie eines Sicherheitsstandards ausgebildet sind, während die Sicherheitssteuerung 10 gemäß einer zweiten, höheren Sicherheitskategorie des Sicherheitsstandards ausgebildet ist und damit erhöhte Sicherheitsanforderungen erfüllt. Beispielhaft umfasst die Sicherheitssteuerung 10 wenigstens zwei unabhängig voneinander arbeitende Prozessoren, die zur Durchführung gleichartiger Rechenoperationen ausgebildet sind und jeweils eine gegenseitige Kontrolle durchführen, um hierdurch beispielsweise die Wahrscheinlichkeit einer falschen Positionsbestimmung für den Stempel 5 gegenüber der Matrizen 6 reduzieren zu können.

Die Maschinensteuerung 11 ist dazu ausgebildet, das Positionssignal, das von der Abtasteinrichtung 27 bereitgestellt wird, mit einer auch als erster Arbeitstakt bezeichneten Taktfrequenz von beispielsweise 1 kHz zu verarbeiten, so dass ein von der Maschinensteuerung 11 ausgegebener erster Positionswert bereits nach einer sehr kurzen Zeitspanne, die eine oder nur wenige Millisekunden umfasst, bereitgestellt werden kann.

Demgegenüber ist die Sicherheitssteuerung 10 deutlich langsamer, da aufgrund der Anforderungen der höheren Sicherheitskategorie, die für die Sicherheitssteuerung 10 zugrundezulegen sind, eine umfangreichere Berechnung und Prüfung des auf Basis des Positionssignals berechneten zweiten Positionswerts erforderlich ist, so dass eine Ausgabe des zweiten Positionswerts durch die Sicherheitssteuerung 10 mit einer niedrigen Taktfrequenz, exemplarisch mit einer Taktfrequenz von 100 Hertz, vorgenommen wird.

Hieraus resultiert, dass ein von der Abtasteinrichtung 27 bereitgestelltes Positionssignal von der Maschinensteuerung 11 beispielsweise bereits nach einer Millisekunde als erster Positionswert bereitgestellt wird, von der Sicherheitssteuerung 10 jedoch erst nach 10 Millisekunden als zweiter Positionswert zur Verfügung steht, so dass kein unmittelbarer Vergleich des ersten Positionswerts mit dem zweiten Positionswert vorgenommen werden kann.

Um einen sinnvollen Vergleich zwischen dem ersten Positionswert und dem zweiten Positionswert vornehmen zu können und insbesondere eine Deaktivierung eines Strahlungsdetektors 23, 24, 25 in Abhängigkeit von einer Position des Stempels 5 durchführen zu können ist vorgesehen, dass die Maschinensteuerung 11 den jeweils neuesten ersten Positionswert an die Sicherheitssteuerung 10 bereitgestellt und die Sicherheitssteuerung 10 eine weitere Verarbeitung sowohl des ersten Positionswerts als auch des zweiten Positionswerts vornimmt.

Hierzu ist vorgesehen, dass die Sicherheitssteuerung 10 den von der Maschinensteuerung 11 bereitgestellten aktuellen ersten Positionswert mit einem ersten Positionskorrekturwert addiert, um einen ersten Istpositionswert zu erhalten. Ferner ist vorgesehen, dass die Sicherheitssteuerung den jeweils aktuellen zweiten Positionswert mit einem zweiten Positionskorrekturwert addiert, um einen zweiten Istpositionswert zu erhalten. Anschließend kann in der Sicherheitssteuerung 10 ein Vergleich zwischen dem ersten Istpositionswert, dem zweiten Istpositionswert und einem in der Sicherheitssteuerung 10 gespeicherten Deaktivierungspositionswert vorgenommen werden. Exemplarisch kann vorgesehen sein, dass eine Deaktivierung des ersten Strahlungsdetektors 23 zu einem Zeitpunkt vorgenommen wird, der unmittelbar vor einer Unterbrechung des zugeordneten Detektionsstrahls 14 durch die Annäherung des mit dem Lichtgitter 21 ausgerüsteten Werkzeugträgers 4 an die Matrize 6 erfolgt. Hierdurch wird eine sicherheitsgerichtete Abschaltung der Antriebseinrichtung 37 durch die Sicherheitssteuerung 10 und die damit verbundene Trenneinrichtung verhindert.

Beispielhaft ist vorgesehen, dass der erste Positionskorrekturwert derart berechnet ist, dass er derjenigen Strecke entspricht, die der Werkzeughalter 4 bei einer ersten Schließgeschwindigkeit, insbesondere einer maximalen Schließgeschwindigkeit, während der Zeitspanne zurücklegt, die zur Berechnung des ersten Positionswerts durch die Maschinensteuerung 11 erforderlich ist. Ferner ist rein exemplarisch vorgesehen, dass der zweite Positionskorrekturwert derart berechnet ist, dass er derjenigen Strecke entspricht, die der Werkzeughalter bei der ersten Schließgeschwindigkeit während der Zeitspanne zurücklegt, die zur Berechnung des zweiten Positionswerts durch die Sicherheitssteuerung 10 erforderlich ist.

Der erste Deaktivierungspositionswert entspricht einer Position des Werkzeugträgers 4 mit dem daran angebrachten Stempel 5 gegenüber der Matrize 6, die um einen ersten Abstand von derjenigen Position des Werkzeugträgers 4 entfernt ist, an der die Ausblendung des ersten Strahlungsdetektors 23 durchgeführt werden muss, um eine Unterbrechung der auf den ersten Strahlungsdetektors 23 auftreffenden Detektionsstrahlen 14 durch die Matrize 6 während der Verkleinerung des Arbeitsspalts 20 zu verhindern. Der erste Abstand entspricht dabei derjenigen Strecke, die der Werkzeugträger 4 bei der ersten Schließgeschwindigkeit während der Zeitspanne zurücklegt, die zur Durchführung des Vergleichs zwischen dem ersten Istpositionswert, dem zweiten Istpositionswert und dem ersten Deaktivierungspositionswert durch die Sicherheitssteuerung 10 erforderlich ist.

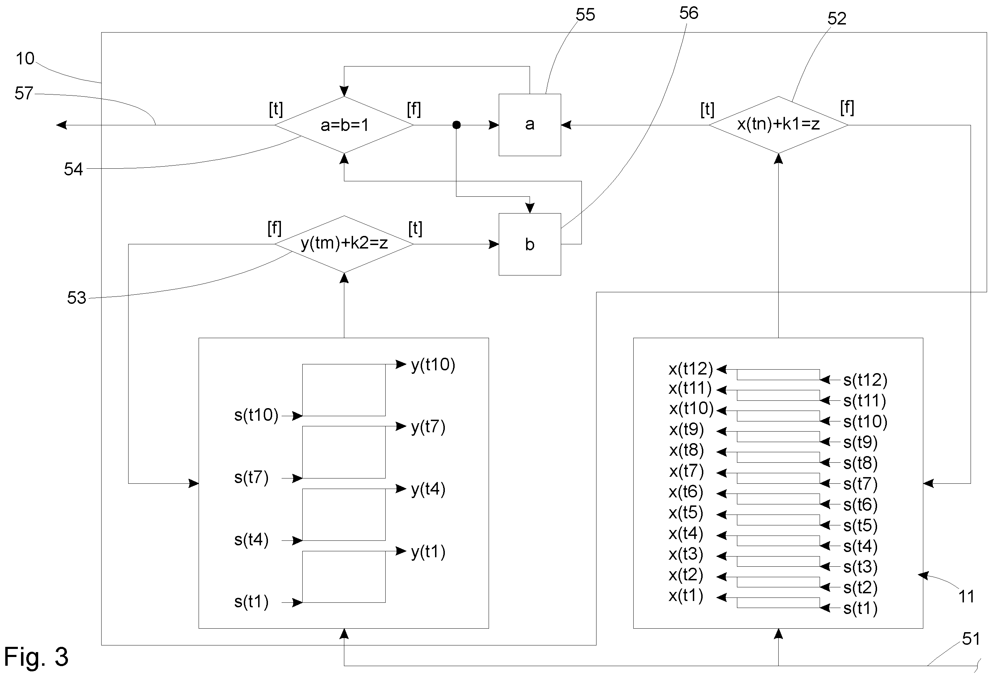

Eine schematische Darstellung der Vorgehensweise zur Deaktivierung des ersten Strahlungsdetektors 23 ist der Figur 3 zu entnehmen. Hierbei ist vorgesehen, das Positionssignal des Positionsmesssystems 12 über eine Signalleitung 51, die mit der Abtasteinrichtung 27 verbunden ist, sowohl an die Sicherheitssteuerung 10 als auch an die Maschinensteuerung 11 bereitzustellen.

In der Maschinensteuerung 11 erfolgt eine Berechnung von ersten Positionswerten x(t) aus den Positionssignalen s(t), wobei rein exemplarisch davon ausgegangen wird, dass diese Berechnung jeweils innerhalb einer Zeitspanne durchgeführt wird, die dem ersten Arbeitstakt der Maschinensteuerung 11 entspricht. In der Sicherheitssteuerung 10 erfolgt eine Berechnung von zweiten Positionswerten y(t), wobei rein exemplarisch davon ausgegangen wird, dass diese Berechnung jeweils innerhalb einer Zeitspanne durchgeführt wird, die den zweiten Arbeitstakt der Sicherheitssteuerung 10 entspricht. Hierbei resultiert aus dem Umstand, dass der zweite Arbeitstakt der Sicherheitssteuerung 10 deutlich länger als der erste Arbeitstakt der Maschinensteuerung 11 ist, dass beispielsweise zu einem Zeitpunkt, zu dem der in der Sicherheitssteuerung 11 auf Basis des Positionssignals s(t10) berechnete zweite Positionswert y(t10) ausgegeben werden kann, von der Maschinensteuerung 11 bereits der auf Basis des Positionssignals s(t12) berechnete erste Positionswert x(t12) ausgegeben werden kann. Um anschließend das Vorliegen der Bedingung zur Ausblendung oder Deaktivierung des ersten Strahlungsdetektors überprüfen zu können, die derart formuliert ist, dass die von der Sicherheitssteuerung 10 und von der Maschinensteuerung 11 berechneten Positionen mit dem ersten Deaktivierungspositionswert übereinstimmen, sind noch zusätzliche Maßnahmen erforderlich.

Hierzu wird der von der Maschinensteuerung 11 ausgegebene erste Positionswert x(t) an die Sicherheitssteuerung 10 übermittelt und im Rahmen einer ersten Rechenoperation 52 in der Sicherheitssteuerung 10 zu einem ersten Positionskorrekturwert k1 addiert und anschließend im Rahmen der ersten Rechenoperation 52 ein Vergleich mit dem ersten Deaktivierungspositionswert z vorgenommen. Alternativ kann vorgesehen werden, dass die erste Rechenoperation 52 und der Vergleich in der Maschinensteuerung 11 ausgeführt werden. Sofern der Vergleich positiv [t] ausfällt, erfolgt eine Ausgabe eines als erstes Statussignal dienenden logischen High-Pegels a=1 von der ersten Rechenoperation 52 in einen ersten Zwischenspeicher 55. Fällt dieser Vergleich hingegen negativ [f] aus, so erfolgt eine Anforderung eines aktualisierten ersten Positionswerts x(t+1) von der Maschinensteuerung 11 sowie eine Ausgabe eines logischen Low-Pegels a=0 an den ersten Zwischenspeicher 55.

Ferner wird der von der Sicherheitssteuerung 10 ermittelte zweite Positionswert y(t) im Rahmen einer zweiten Rechenoperation 53 in der Sicherheitssteuerung 10 zu einem zweiten Positionskorrekturwert k2 addiert und anschließend im Rahmen der zweiten Rechenoperation 53 ein Vergleich mit dem ersten Deaktivierungspositionswert z vorgenommen. Sofern dieser Vergleich positiv [t] ausfällt, erfolgt eine Ausgabe eines als zweites Statussignal dienenden logischen High-Pegels b=1 von der zweiten Rechenoperation 53 in einen zweiten Zwischenspeicher 56. Fällt dieser Vergleich hingegen negativ [f] aus, so erfolgt eine Anforderung eines aktualisierten ersten Positionswerts y(t+1) von der Sicherheitssteuerung 10 sowie eine Ausgabe eines logischen Low-Pegels b=0 an den zweiten Zwischenspeicher 56.

In der Sicherheitssteuerung 10 wird ferner eine dritte Rechenoperation 54 durchgeführt, die darin besteht, dass ein Vergleich zwischen dem im ersten Zwischenspeicher 55 gespeicherten logischen Pegel a (erstes Statussignal) und dem im zweiten Zwischenspeicher 56 gespeicherten logischen Pegel b (zweites Statussignal) mit dem High-Pegel 1 vorgenommen wird. Für den Fall, dass die Bedingung a=b=1 erfüllt ist, stellt die Sicherheitssteuerung 10 ein Ausblendsignal 57 zur Verfügung. Das Ausblendsignal 57 kann beispielsweise innerhalb der Sicherheitssteuerung 10 dazu genutzt werden, eine Verarbeitung von Sensorsignalen des ersten Strahlungsdetektors 23 zu unterbrechen, so dass eine Veränderung eines Signalpegels des ersten Strahlungsdetektors 23 nicht zu einer Ansteuerung der Trenneinrichtung 17 führt.

Die Gesenkbiegemaschine 1 kann exemplarisch wie folgt betrieben werden: zunächst erfolgt in einer Ruhestellung des Werkzeugträgers 4, in der dieser einen maximalen Abstand zum Maschinenbett 2 und der daran angebrachten Matrize 6 einnimmt, ein Selbsttest des Lichtgitters 21. Hierbei wird überprüft, ob die Detektorstrahlen 14 beim Auftreffen auf die Strahlungsdetektoren 23, 24, 25 entsprechende Signale auslösen. Ferner erfolgt eine Positionierung der Sendeeinrichtung 8 und der Empfangseinrichtung 9 des Lichtgitters 21 mittels der Führungsmittel 18 in Abhängigkeit von dem am Werkzeugträger 4 aufgenommenen Stempel 5. Dabei findet eine Geometrie des Stempels 5 ebenso Berücksichtigung wie ein Nachlaufweg des Werkzeugträgers 4, der auch als Bremsweg bezeichnet werden kann und diejenige Strecke beschreibt, die der Werkzeugträger 4 zurücklegt, wenn eine Unterbrechung des Lichtgitters 21 ermittelt wird. Diese Strecke hängt insbesondere vom zweiten Arbeitstakt der Sicherheitssteuerung 10 sowie von der Reaktionszeit der Trenneinrichtung 17 sowie der jeweiligen Schließgeschwindigkeit, also der Annäherungsgeschwindigkeit von Stempel 5 und Matrize 6 ab. Vorzugsweise ist hierbei vorgesehen, dass der erste Strahlungsdetektor 23 derart beabstandet von der Arbeitskante 36 des Stempels 5 angeordnet ist, dass dieser Abstand zwischen erstem Strahlungsdetektor 23 und der Arbeitskante 36 zumindest dem Nachlaufweg entspricht.

Anschließend kann der Benutzer nach Auflegen des Werkstücks auf die Matrize 6 durch Betätigen des Fußschalters 15 die Bearbeitung auslösen. Hierzu ist ein vorgebbarer Bewegungsablauf für den Stempel 5 vorgesehen, der exemplarisch die folgenden Schritte umfassen kann. In einem ersten Schritt nach Betätigung des Fußschalters 15 wird der Werkzeugträger 4 auf eine erste Schließgeschwindigkeit beschleunigt, die auch als "Schnellgang" oder "Eilgang" bezeichnet wird. Bei dieser schnellen Bewegung findet beispielhaft eine Überwachung aller Strahlungsdetektoren 23, 24, 25 statt. Sofern bei der Annäherung des Werkzeugträgers 4 an die Matrize 6 keine Unterbrechung zumindest eines der Detektionsstrahlen 14 von den Strahlungsdetektoren 23, 24, 25 detektiert wird, ist vorgesehen, bei Erreichen eines vorgebbaren Abstands zwischen Stempel 5 und Matrize 6 eine Ausblendung der Signale des ersten Strahlungsdetektors 23 vorzunehmen. Durch diese Ausblendung wird eine unerwünschte Aktivierung der Trenneinrichtung 17 verhindert, die ansonsten durch die Unterbrechung der auf den Strahlungsdetektor 23 auftreffenden der Detektionsstrahlen 14 eintreten würde.

Zur Durchführung dieser Ausblendung ist vorgesehen, dass sowohl die Sicherheitssteuerung 10 als auch die Maschinensteuerung 11 anhand der Positionssignale des Positionsmesssystems 12 jeweils Positionswerte ermitteln, die anschließend in der Sicherheitssteuerung 10 unter Verwendung von Positionskorrekturwerten zu Istpositionswerten weiterverarbeitet werden, die ihrerseits mit dem ersten Deaktivierungspositionswert verglichen werden können, um daraus das erste bzw. zweite Statussignal zu bestimmen. Bei Übereinstimmung des ersten Statussignals a und des zweiten Statussignals b kann dann die Deaktivierung des ersten Strahlungsdetektors 23 vorgenommen werden. Ferner kann zum Zeitpunkt der Ausblendung des ersten Strahlungsdetektors 23 auch eine Umschaltung von der ersten Annäherungsgeschwindigkeit bzw. Schließgeschwindigkeit auf eine zweite Annäherungsgeschwindigkeit bzw. Schließgeschwindigkeit vorgenommen werden, um ein zu rasches Auftreffen des Stempels 5 auf das Werkstück zu vermeiden.

## Patentansprüche

1. Umformeinrichtung (1) mit einem Maschinenbett (2), an dem ein erstes Werkzeug (6) angeordnet ist, und mit einem relativbeweglich am Maschinenbett (2) aufgenommenen Werkzeugträger (4), dem ein zweites Werkzeug (5) und eine Antriebseinrichtung (37) zur Bewegung des Werkzeugträgers (4) zugeordnet sind, wobei das zweite Werkzeug (5) mit dem ersten Werkzeug (6) einen größenvariablen Arbeitsspalt (20) bestimmt, mit einer Maschinensteuerung (11) zur Ansteuerung der Antriebseinrichtung (37) und mit einer Sicherheitssteuerung (10) zur Sperrung der Antriebseinrichtung (37), wobei die Sicherheitssteuerung (10) mit wenigstens einer Strahlungsquelle (8) und mit mehreren der Strahlungsquelle (8) gegenüberliegend angeordneten Strahlungsdetektoren (23, 24, 25) verbunden ist, wobei zumindest ein Teil der von der Strahlungsquelle (8) ausgehenden Strahlenbündel (14) längs einer Arbeitskante (36) des ersten Werkzeugs (6) ausgerichtet ist, sowie mit einem der Antriebseinrichtung (37) zugeordneten Positionsmesssystem (12), das zur Bereitstellung von Positionssignalen in Abhängigkeit von einer Position des Werkzeugträgers (4) ausgebildet ist, wobei die Maschinensteuerung (11) ein erstes Wegmesssystem für eine zyklische Verarbeitung der Positionssignale in einem ersten, schnellen Arbeitstakt zu ersten Positionswerten aufweist und wobei die Sicherheitssteuerung (10) ein zweites Wegmesssystem für eine zyklische Verarbeitung der Positionssignale in einem zweiten, langsamen Arbeitstakt zu zweiten Positionswerten aufweist, **dadurch gekennzeichnet, dass** die Sicherheitssteuerung (10) dazu ausgebildet ist, für eine Deaktivierung eines ersten Strahlungsdetektors (23) an einer vorgegebenen ersten Deaktivierungsposition einen Vergleich zwischen einem ersten Statussignal (a) und einem zweiten Statussignal (b) vorzunehmen, wobei das erste Statussignal (a) durch Vergleich eines, insbesondere von der Maschinensteuerung (11), durch Addition eines ersten Positionskorrekturwerts zum ersten Positionswert erhaltenen ersten Istpositionswerts mit einem ersten Deaktivierungspositionswert ermittelt wird und wobei das zweite Statussignal (b) durch Vergleich eines, insbesondere von der Sicherheitssteuerung (10), durch Addition eines zweiten Positionskorrekturwerts mit dem zweiten Positionswert erhaltenen zweiten Istpositionswerts mit dem ersten Deaktivierungspositionswert ermittelt wird und wobei die Sicherheitssteuerung (10) dazu ausgebildet ist, die Deaktivierung bei Übereinstimmung des ersten Statussignals (a) mit dem zweiten Statussignal (b) vorzunehmen.

2. Umformeinrichtung (1) nach Anspruch 1, **dadurch gekennzeichnet, dass** die Sicherheitssteuerung (10) derart eingerichtet ist, dass eine Deaktivierung eines zweiten Strahlungsdetektors (24) an einer vorgegebenen zweiten Deaktivierungsposition, insbesondere ausschließlich, anhand des zweiten Positionswerts vorzunehmen, wobei ein Abstand des ersten Strahlungsdetektors (23) zum zweiten Werkzeug (5) größer als ein Abstand des zweiten Strahlungsdetektors (24) zum zweiten Werkzeug (5) ist.

3. Umformeinrichtung (1) nach Anspruch 1 oder 2, **dadurch gekennzeichnet, dass** die Maschinensteuerung (11) derart eingerichtet ist, dass der erste Positionskorrekturwert anhand einer ersten, insbesondere maximalen, Annäherungsgeschwindigkeit für die Annäherung des zweiten Werkzeugs (5) an das erste Werkzeug (6) und einer ersten Zykluszeit für den ersten Arbeitstakt ermittelt wird und dass die Sicherheitssteuerung (10) derart eingerichtet ist, dass der zweite Positionskorrekturwert anhand der ersten, insbesondere maximalen, Annäherungsgeschwindigkeit und einer zweiten Zykluszeit für den zweiten Arbeitstakt ermittelt wird.

4. Umformeinrichtung nach Anspruch 1, 2 oder 3, **dadurch gekennzeichnet, dass** die Sicherheitssteuerung (10) derart eingerichtet ist, dass die Deaktivierung des ersten Strahlungsdetektors nur dann erfolgt, wenn der zweite Istpositionswert zeitlich vor dem ersten Istpositionswert vorliegt.

5. Verfahren zum Betreiben einer, insbesondere nach einem der vorhergehenden Ansprüche ausgebildeten, Umformeinrichtung (1) mit den Schritten: Ermitteln von Positionssignalen eines Positionsmesssystems (12) zur Berechnung eines zeitlich variablen Abstands zwischen einem ersten Werkzeug (6), das an einem Maschinenbett (2) angeordnet ist und einem zweiten Werkzeug (5), das an einem relativbeweglich am Maschinenbett (2) aufgenommenen Werkzeugträger (4) festgelegt ist und das mit dem ersten Werkzeug (6) einen größenvariablen Arbeitsspalt (20) bestimmt, Verarbeiten der Positionssignale in einem ersten Wegmesssystem einer Maschinensteuerung (11), das mit einem ersten, schnellen Arbeitstakt betrieben wird, zu ersten Positionswerten und Verarbeiten der Positionssignale in einem zweiten Wegmesssystem einer Sicherheitssteuerung (10), das mit einem zweiten, langsamen Arbeitstakt betrieben wird, zu zweiten Positionswerten, Verarbeiten eines ersten Detektorsignals eines ersten Strahlungsdetektors (23) und Verarbeiten eines zweiten Detektorsignals eines zweiten Strahlungsdetektors (24), die an einem ersten seitlichen Endbereich des zweiten Werkzeugs (5) angeordnet sind und die von einer gegenüberliegend an einem zweiten Endbereich des zweiten Werkzeugs (5) angeordneten Strahlungsquelle (8) beleuchtet werden, in der Sicherheitssteuerung (10), wobei ein Abstand des ersten Strahlungsdetektors (23) zum zweiten Werkzeug (5) größer als ein Abstand des zweiten Strahlungsdetektors (24) zum zweiten Werkzeug (5) ist, Freigeben einer Energieversorgung für eine mit dem Werkzeugträger (4) gekoppelte Antriebseinrichtung (37) durch die Maschinensteuerung (11) und die Sicherheitssteuerung (12) bei einer Spaltweite des Arbeitsspalts (20), die größer als eine vorgegebene Spaltweite ist, zur Reduzierung der Spaltweite des Arbeitsspalts (20) mit einer ersten, insbesondere maximalen, Annäherungsgeschwindigkeit zwischen erstem Werkzeug (6) und zweitem Werkzeug (5), Durchführen eines Vergleichs zwischen einem ersten Statussignal (a) und einem zweiten Statussignal (b), wobei das erste Statussignal (a) durch Vergleich eines von der Maschinensteuerung (11) oder von der Sicherheitssteuerung (10) durch Addition eines ersten Positionskorrekturwerts und des ersten Positionswerts erhaltenen ersten Istpositionswerts mit einem ersten Deaktivierungspositionswert ermittelt wird und wobei das zweite Statussignal (b) durch Vergleich eines von der Sicherheitssteuerung (10) durch Addition eines zweiten Positionskorrekturwerts und dem zweiten Positionswert erhaltenen zweiten Istpositionswerts mit dem ersten Deaktivierungspositionswert erhalten wird, und Deaktivieren des ersten Strahlungsdetektors (23) bei Vorliegen einer Übereinstimmung zwischen dem ersten Statussignal (a) und dem zweiten Statussignal (b).

6. Verfahren nach Anspruch 5, **dadurch gekennzeichnet, dass** mit der Deaktivierung des ersten Strahlungsdetektors (23) eine Umschaltung der Antriebseinrichtung (37) von der ersten Annäherungsgeschwindigkeit auf eine zweite, insbesondere mittlere, Annäherungsgeschwindigkeit vorgenommen wird.

7. Verfahren nach Anspruch 5 oder 6, **dadurch gekennzeichnet, dass** von der Sicherheitssteuerung (10) eine Deaktivierung des zweiten Strahlungsdetektors (24) an einer zweiten Deaktivierungsposition vorgenommen wird, wenn der zweite Positionswert mit der zweiten Deaktivierungsposition übereinstimmt.

8. Verfahren nach Anspruch 7, **dadurch gekennzeichnet, dass** mit der Deaktivierung des zweiten Strahlungsdetektors (24) eine Umschaltung der Antriebseinrichtung (37) von der zweiten Annäherungsgeschwindigkeit auf eine dritte, insbesondere niedrige, Annäherungsgeschwindigkeit vorgenommen wird.

9. Verfahren nach Anspruch 5, 6, 7 oder 8, **dadurch gekennzeichnet, dass** der erste Positionskorrekturwert anhand der ersten Annäherungsgeschwindigkeit und einer ersten Zykluszeit für den ersten Arbeitstakt ermittelt wird und dass der zweite Positionskorrekturwert anhand der ersten Annäherungsgeschwindigkeit und einer zweiten Zykluszeit für den zweiten Arbeitstakt ermittelt wird.

10. Verfahren nach einem der Ansprüche 5 bis 9, **dadurch gekennzeichnet, dass** der erste Deaktivierungspositionswert einen ersten Abstand zu einer ersten Deaktivierungsposition für die Deaktivierung des ersten Strahlungsdetektors (23) aufweist, wobei der erste Abstand derart bemessen ist, dass der von der Sicherheitssteuerung (10) innerhalb des zweiten Arbeitstakts durchgeführte Vergleich zwischen dem ersten Istpositionswert und dem zweiten Istpositionswert abgeschlossen ist, bevor der Werkzeugträger (4) die erste Deaktivierungsposition erreicht.

## Claims

1. Forming device (1) with a machine bed (2), on which a first tool (6) is arranged, and with a tool carrier (4) which is accommodated on the machine bed (2) so as to be relatively movable and with which a second tool (5) and a drive device (37) for moving the tool carrier (4) are associated, wherein the second tool (5) determines a size-variable working gap (20) with the first tool (6), with a machine control (11) for controlling the drive device (37) and with a safety control (10) for blocking the drive device (37), the safety control (10) being connected to at least one radiation source (8) and to a plurality of radiation detectors (23, 24, 25) arranged opposite the radiation source (8), at least part of the radiation beams (14) emanating from the radiation source (8) being aligned along a working edge (36) of the first tool (6) as well as with a position measuring system (12) which is assigned to the drive device (37) and which is designed to provide position signals as a function of a position of the tool carrier (4), wherein the machine control (11) comprises a first path measuring system for cyclic processing of the position signals in a first fast working cycle to form first position values, fast operating cycle to form first position values, and the safety controller (10) having a second path-measuring system for cyclic processing of the position signals in a second, slow operating cycle to form second position values, **characterized in that** the safety controller (10) is configured for a deactivation of a first radiation detector (23) at a predetermined first deactivation position, to carry out a comparison between a first status signal (a) and a second status signal (b), the first status signal (a) being determined by comparison of a first position correction value, in particular from the machine control (11), by comparing a first actual position value, obtained in particular by the machine controller (11) by adding a first position correction value to the first position value, with a first deactivation position value, and the second status signal (b) being determined by comparing a second actual position value, obtained in particular by the safety controller (10) by adding a second position correction value to the second position value, with the first deactivation position value, and the safety controller (10) being designed to carry out the deactivation when the first status signal (a) corresponds to the second status signal (b).

2. Forming device (1) according to claim 1, **characterized in that** the safety controller (10) is set up in such a way that deactivation of a second radiation detector (24) is to be carried out at a predetermined second deactivation position, in particular exclusively, on the basis of the second position value, a distance of the first radiation detector (23) from the second tool (5) being greater than a distance of the second radiation detector (24) from the second tool (5).

3. 5. Forming device (1) according to claim 1 or 2, **characterized in that** the machine control (11) is set up in such a way that the first position correction value is determined on the basis of a first, in particular maximum, approach speed for the approach of the second tool (5) to the first tool (6) and a first cycle time for the first working cycle, and **in that** the safety control (10) is set up in such a way that the second position correction value is determined on the basis of the first, in particular maximum, approach speed and a second cycle time for the second working cycle.

4. 6. Forming device according to claim 1, 2 or 3, **characterized in that** the safety control (10) is set up in such a way that the deactivation of the first radiation detector takes place only if the second actual position value is present in time before the first actual position value.

5. 8. Method for operating a forming device (1), in particular designed according to one of the preceding claims, having the steps: Determining position signals of a position measuring system (12) for calculating a time-variable distance between a first tool (6), which is arranged on a machine bed (2), and a second tool (5), which is fixed to a tool carrier (4) accommodated on the machine bed (2) in a relatively movable manner and which determines a size-variable working gap (20) with the first tool (6), processing the position signals in a first displacement measuring system of a machine control (11), which is operated with a first, fast working cycle, to form first position values, and processing the position signals in a second displacement measuring system of a safety control (10) which is operated with a second, slow operating cycle, to second position values, processing a first detector signal of a first radiation detector (23) and processing a second detector signal of a second radiation detector (24), disposed at a first lateral end portion of the second tool (5) and which are illuminated by a radiation source (8) oppositely disposed at a second end portion of the second tool (5), in the safety controller (10), wherein a distance of the first radiation detector (23) from the second tool (5) is greater than a distance of the second radiation detector (24) from the second tool (5), enabling of a power supply for a drive device (37) coupled to the tool carrier (4) by the machine controller (11) and the safety controller (12) in the event of a gap width of the working gap (20) which is greater than a predetermined gap width, in order to reduce the gap width of the working gap (20) with a first, in particular maximum, approach speed between the first tool (6) and the second tool (5), carrying out a comparison between a first status signal (a) and a second status signal (b), wherein the first status signal (a) is obtained by comparing a first actual position value obtained by the machine controller (11) or by the safety controller (10) by adding a first position correction value and the first position value with a first deactivation position value, and wherein the second status signal (b) is obtained by comparing a second actual position value obtained by the safety controller (10) by adding a second position correction value and the second position value with the first deactivation position value, and deactivating the first radiation detector (23) when there is a match between the first status signal (a) and the second status signal (b).

6. 10. Method according to claim 5, **characterized in that** with the deactivation of the first radiation detector (23) a switching of the drive device (37) from the first approach speed to a second, in particular average, approach speed is performed.

7. Method according to claim 5 or 6, **characterized in that** a deactivation of the second radiation detector (24) is carried out by the safety controller (10) at a second deactivation position if the second position value coincides with the second deactivation position.

8. Method according to claim 7, **characterized in that** with the deactivation of the second radiation detector (24) a switching of the drive device (37) from the second approach speed to a third, in particular low, approach speed is performed.

9. Method according to claim 5, 6, 7 or 8, **characterized in that** the first position correction value is determined on the basis of the first approach speed and a first cycle time for the first operating cycle, and **in that** the second position correction value is determined on the basis of the first approach speed and a second cycle time for the second operating cycle.

10. Method according to any one of claims 5 to 9, **characterized in that** the first deactivation position value has a first distance to a first deactivation position for the deactivation of the first radiation detector (23), wherein the first distance is dimensioned such that the comparison between the first actual position value and the second actual position value performed by the safety controller (10) within the second working cycle is completed before the tool carrier (4) reaches the first deactivation position.

## Revendications

1. Dispositif (1) de formage comprenant un socle (2) de machine, sur lequel est monté un premier outil (6), et comprenant un porte-outil (4) reçu sur le socle (2) de machine avec possibilité de mouvement relatif, auquel sont affectés un deuxième outil (5) et un dispositif (37) d'entraînement pour le déplacement du porte-outil (4), dans lequel le deuxième outil (5) détermine avec le premier outil (6) un intervalle (20) de travail variable en dimension, comprenant une commande (11) de machine pour la commande du dispositif (37) d'entraînement et comprenant une commande (10) de sécurité pour le blocage du dispositif (37) d'entraînement, dans lequel la commande (10) de sécurité est reliée à au moins une source (8) de rayonnement et à plusieurs détecteurs (23, 24, 25) de rayonnement faisant face à la source (8) de rayonnement, dans lequel au moins une partie du faisceau (14) de rayonnement partant de la source (8) de rayonnement est dirigé le long d'un bord (36) de travail du premier outil (6), ainsi que comprenant, affecté au dispositif (37) d'entraînement, un système (12) de mesure de position, qui est constitué pour donner des signaux de position en fonction d'une position du porte-outil (4), dans lequel la commande (11) de machine a un premier système de mesure de course pour une transformation cyclique des signaux de position dans une première cadence de travail rapide en des premières valeurs de position et dans lequel la commande (10) de sécurité a un deuxième système de mesure de course pour une transformation cyclique des signaux de position dans une deuxième cadence de travail lente en des deuxième valeurs de position, **caractérisé en ce que** la commande (10) de sécurité est constituée pour effectuer, pour une désactivation d'un premier détecteur (23) de rayonnement en une première position de désactivation donnée à l'avance, une comparaison entre un premier signal (a) de statut et un deuxième signal (b) de statut, dans lequel le premier signal (a) de statut est déterminé par comparaison à une première valeur de position de désactivation d'une première valeur de position réelle obtenue, en particulier par la commande (11) de machine, par addition d'une première valeur de correction de position à la première valeur de position, et dans lequel le deuxième signal (b) de statut est déterminé par comparaison à la première valeur de position de désactivation d'une deuxième valeur de position réelle obtenue, en particulier par la commande (10) de sécurité, par addition d'une deuxième valeur de correction de position à la deuxième valeur de position et dans lequel la commande (10) de sécurité est constituée pour effectuer la désactivation s'il y a coïncidence entre le premier signal (a) de statut et le deuxième signal (b) de statut.

2. Dispositif (1) de formage suivant la revendication 1, **caractérisé en ce que** la commande (10) de sécurité est agencée de manière à effectuer une désactivation d'un deuxième détecteur (24) de rayonnement en une deuxième position de désactivation donnée à l'avance, en particulier exclusivement, à l'aide de la deuxième valeur de position, dans lequel une distance du premier détecteur (23) de rayonnement au deuxième outil (5) est plus grande qu'une distance du deuxième détecteur (24) de rayonnement au deuxième outil (5).

3. Dispositif (1) de formage suivant la revendication 1 ou 2, **caractérisé en ce que** la commande (11) de machine est agencée de manière à ce que la première valeur de correction de position soit déterminée à l'aide d'une première vitesse de rapprochement, en particulier maximum, pour le rapprochement du deuxième outil (5) du premier outil (6) et d'un premier temps de cycle pour la première cadence de travail et **en ce que** la commande (10) de sécurité est agencée de manière à déterminer la deuxième valeur de correction de position à l'aide d'une première vitesse de rapprochement, en particulier maximum, et d'un deuxième temps de cycle pour la deuxième cadence de travail.

4. Dispositif de formage suivant la revendication 1, 2 ou 3, **caractérisé en ce que** la commande (10) de sécurité est agencée pour n'effectuer la désactivation du premier détecteur de rayonnement que si la deuxième valeur de position réelle est dans le temps antérieure à la première valeur de position réelle.

5. Procédé pour faire fonctionner un dispositif (1) de formage, constitué en particulier suivant l'une des revendications précédentes, comprenant les stades : détermination de signaux de position d'un système (12) de mesure de position pour le calcul d'une distance variable dans le temps entre un premier outil (6), qui est monté sur un socle (2) de machine, et un deuxième outil (5), qui est fixé sur un porte-outil (4) reçu sur le socle (2) de machine avec possibilité de déplacement relatif, et qui détermine un intervalle (20) de travail variable en dimension avec le premier outil (6), transformation des signaux de position dans un premier système de mesure de course d'une commande (11) de machine, que l'on fait fonctionner avec une première cadence de travail rapide, en des premières valeurs de position et transformation des signaux de position dans un deuxième système de mesure de course d'une commande (10) de sécurité, que l'on fait fonctionner à une deuxième cadence de travail lente, en des deuxième valeurs de position, transformation d'un premier signal de détecteur d'un premier détecteur (23) de rayonnement et transformation, dans la commande (10) de sécurité, d'un deuxième signal de détecteur d'un deuxième détecteur (24) de rayonnement, qui sont montés à une première partie d'extrémité latérale du deuxième outil (5) et qui sont éclairés par une source (8) de rayonnement montée en face sur une deuxième partie d'extrémité du deuxième outil (5), dans lequel une distance du premier détecteur (23) de rayonnement au deuxième outil (5) est plus grande qu'une distance du deuxième détecteur (24) de rayonnement au deuxième outil (5), validation d'une alimentation en énergie pour un dispositif (37) d'entraînement, accouplé au porte-outil (4), par la commande (11) de machine et la commande (12) de sécurité, si la dimension de l'intervalle (20) de travail est plus grande qu'une largeur d'intervalle donnée à l'avance, pour la réduction de la largeur de l'intervalle (20) de travail à une première vitesse de rapprochement, notamment maximum, entre le premier outil (6) et le deuxième outil (5), exécution d'une comparaison entre un premier signal (a) de statut et un deuxième signal (b) de statut, dans lequel le premier signal (a) de statut est déterminé par comparaison à une première valeur de position de désactivation d'une première valeur de position réelle, obtenue, par la commande (11) de machine ou par la commande (10) de sécurité, par addition d'une première valeur de correction de position à la première valeur de position, et dans lequel le deuxième signal (b) de statut est déterminé par comparaison à la première valeur de position de désactivation d'une deuxième valeur de position réelle, obtenue, par la commande (10) de sécurité, par addition d'une deuxième valeur de correction de position à la deuxième valeur de position, et désactivation du premier détecteur (23) de rayonnement s'il y a coïncidence entre le premier signal (a) de statut et le deuxième signal (b) de statut.

6. Procédé suivant la revendication 5, **caractérisé, en ce qu'**avec la désactivation du premier détecteur (23) de rayonnement on effectue une commutation du dispositif (37) d'entraînement de la première vitesse de rapprochement à une deuxième vitesse de rapprochement, notamment moyenne.

7. Procédé suivant la revendication 5 ou 6, **caractérisé en ce qu'**on effectue, par la commande (10) de sécurité, une désactivation du deuxième détecteur (24) de rayonnement en une deuxième position de désactivation si la deuxième valeur de position coïncide avec la deuxième position de désactivation.

8. Procédé suivant la revendication 7, **caractérisé en ce que**, avec la désactivation du deuxième détecteur (24) de rayonnement, on effectue une commutation du dispositif (37) d'entrainement de la deuxième vitesse de rapprochement à une troisième vitesse de rapprochement, en particulier plus petite.

9. Procédé suivant la revendication 5, 6, 7 ou 8, **caractérisé en ce que** l'on détermine la première valeur de correction de position à l'aide de la première vitesse de rapprochement et d'un premier temps de cycle pour la première cadence de travail et **en ce que** l'on détermine la deuxième valeur de correction de position à l'aide de la première vitesse de rapprochement et d'un deuxième temps de cycle pour la deuxième cadence de travail.

10. Procédé suivant l'une des revendications 5 à 9, **caractérisé en ce que** la première valeur de position de désactivation a une première distance à une première position de désactivation pour la désactivation du premier détecteur (23) de rayonnement, dans lequel la première distance est telle que la comparaison, effectuée par la commande (10) de sécurité dans la deuxième cadence de travail, entre la première valeur de position réelle et la deuxième valeur de position réelle est finie avant que le porte-outil (4) atteigne la première position de désactivation.
